# EUROPEAN PATENT APPLICATION

(11) **EP 3 326 746 A1**
(43) Date of publication of application: **30.05.2018**
(21) Application number: 16200819.7
(22) Date of filing: 25.11.2016
(51) Int. Cl.: B23K 35/32, B23K 35/362, B23K 35/02, C22C 14/00, B23P 6/04

(54) **METHOD FOR JOINING AND/OR REPAIRING SUBSTRATES OF TITANIUM ALUMINIDE ALLOYS**

(71) Applicant: Helmholtz-Zentrum Geesthacht Zentrum für Material- und Küstenforschung GmbH, 21502 Geesthacht (DE)
(72) Inventor: Pyczak, Florian, 21029 Hamburg (DE); Oehring, Michael, 21502 Geesthacht (DE); Lorenz, Uwe, 21357 Bardowick (DE); Hauschildt, Katja, 21033 Hamburg (DE)
(74) Representative: Uexküll & Stolberg

(57) **Abstract**

The present invention relates to a method of bonding two substrates of γ-titanium aluminide alloy at a faying surface, comprising the steps of applying a braze material of a titanium alloy consisting of from 10 to 35 at.% aluminum, from 5 to 30 at.% iron and/or nickel, and optionally other alloying elements present in the substrate material in quantities (at.%) up to their content in the substrate material, the remainder being titanium, at the faying surface of the substrates, and subjecting the substrates and braze material to an elevated temperature above the melting point of the braze material and below γ-solvus temperature of the γ-titanium aluminide alloy thereby joining the substrates by transient liquid phase bonding. Additionally the present invention relates to a method of bonding two substrates of γ-titanium aluminide alloy having a β-single phase region at elevated temperatures at a faying surface, comprising the steps of applying a braze material of a titanium alloy consisting of from 0 to 35 at.% aluminum, from 5 to 30 at.% iron and/or nickel, and optionally other alloying elements present in the substrate material in quantities (at.%) up to their content in the substrate material, the remainder being titanium, at the faying surface of the substrates, and subjecting the substrates and braze material to an elevated temperature in the β-single phase region of the substrate thereby joining the substrates by transient liquid phase bonding. The braze alloy is preferably present in form of a foil or a powder. If present as a powder, the braze alloy is preferably present in admixture with an organic welding flux.

## Description

The present invention relates to a method for joining or repairing substrates of titanium aluminide alloys, especially γ-TiAl alloys, using transient liquid phase (TLP) bonding and to a braze alloy useful for performing said joining or repairing.

### BACKGROUND OF THE INVENTION

Titanium aluminide-base intermetallic alloys have received much attention as a material for various applications in aerospace, automotive and power generation industries. This is in particular true for γ-TiAl alloys, which contain the intermetallic γ-TiAl phase with L1₀-structure (space group P4/mmm) as major phase.

Titanium aluminide-base alloys, in particular γ-TiAl alloys of general composition Ti-(42-49)Al-(0.1-10)X (at.%), where X represents elements selected from Zr, V, Nb, Ta, Cr, Mo, W, Mn, Si, B, C or combinations thereof, possess interesting thermo-physical properties including a high melting point, low density of 3.9-4.2 g·cm⁻³, high Young's modulus, low diffusion coefficient, good oxidation and corrosion resistance and high ignition resistance. The main drawbacks of these alloys are, however, their poor ductility and inherent brittleness (see F. Iqbal, "*Fracture Mechanisms of γ-TiAl Alloys Investigated by In-situ Experiments in a Scanning Electron and Atomic Force Microscope",* Doctorate Thesis, Erlangen 2012). Titanium aluminide alloys cannot sustain increasing load after crack initiation, especially at room temperature.

The intrinsic poor workability of titanium aluminide alloys limits their practical use in some cases. Therefore, it is necessary to develop a suitable joining process to join substrates made of these kinds of alloys. Conventional joining techniques, such as brazing, diffusion bonding and fusion bonding have been investigated.

Accordingly it is necessary to develop a process for joining substrates and/or repair cracks in substrates of titanium aluminide-base alloys which provide structures of high structural homogeneity of the bonding zone.

Joints of titanium aluminide base-alloys made by diffusion bonding using Tini 67 as a filler alloy were studied in A. Guedes et al "Diffusion Brazing of a γ-TiAl Alloy Using Tini 67: Microstructural Evolution of the Interface" in Materials Science Forum 587-588 (2008) 425. Diffusion welded samples were joined at 1000°C and 1100°C, respectively, and it was observed that in the course of heating, several single phase layers were formed within the filler alloy due to the solid state interdiffusion of Ti and Ni atoms. After joining several phases were still detected at the welding interface.

D. Herrmann et al. "Diffusion Bonding of γ(TiAl) Alloys: Influence of Composition, microstructure, and Mechanical Properties", Metallurgical and Materials Transactions A, Vol. 40A (2009), 1881-1902 also discloses joints of titanium aluminide base-alloys by solid state diffusion bonding, where surfaces of cylindrical specimen were ground and carefully cleaned, the workpieces were joined and heated to a bonding temperature of 1000°C and a bonding stress was applied.

Unfortunately, many difficulties, such as the necessity for high machining precision of the mating surface and the time required for diffusion bonding, low service temperature of the brazing joint, and heat-sensitive cracking during fusion bonding, have been encountered when applying these processes to join substrates of titanium aluminide-base alloys. Further, effective methods for repairing damages in workpieces of titanium aluminide-base alloys will still have to be developed, as they are not available yet. Normally a defective workpiece will have to be exchanged for another, which makes these alloys less attractive.

In recent years, a novel bonding technique which combines the advantages of diffusion bonding and brazing, referred-to as transient liquid phase (TLP) bonding has been gaining attention for joining modern advanced materials. The most important difference between diffusion bonding and transient liquid phase (TLP) bonding is the solidification behavior of the liquid phase formed during bonding via TLP. In application, a thin interlayer material, such as a braze foil comprising one or more melting point depressants, is clamped at the faying surface. Thereafter the substrates and braze foil are brought to an elevated temperature above the melting point of the braze foil but below the melting point of the substrates to be joined. Bonding results as melting point depressants diffuse into the substrate which results in isothermal solidification. In conventional brazing processes, the eutectic liquid of brazing solidifies gradually with decreasing temperature. TLP bonding is capable of producing nearly invisible joints which have strengths and other properties similar to the base metal.

Duan et al. "Transient Liquid Phase (TLP) Bonding of TiAl Using Various Insert Foils", Science and Technology of Welding and Joining 2004 (9) 513-518 discloses a method for joining substrates of titanium aluminide-base alloys using transient liquid phase bonding. In this document Ti foil combined with Cu, Ni or Fe foils has been chosen as insert metals. During bonding, Cu, Ni, Fe act as melting point depressants (MPD) of elemental Ti because eutectic reactions are expected to occur at specific temperatures.

TLP bonding using Ti foils combined with Cu, Ni or Fe foils still requires the high machining precision encountered in diffusion bonding and leads to visible joining layers. Further, the method is not suitable for repairing cracks in substrates of titanium aluminides.

### SUMMARY OF THE INVENTION

It has been found that the joints produced by the methods according to the prior art are not satisfactory in providing joints which have strengths and other properties of sufficient similarity to the base titanium aluminide alloy. Accordingly it is an object of the present invention to provide a method for joining substrates of titanium aluminide-base alloys, especially γ-TiAl alloys, using transient liquid phase (TLP) bonding providing joints which have improved strength and ductility in view of those produced by the prior art, and to a braze material useful to perform said bonding. The method or methods should be applicable for joining two titanium aluminide-base alloy substrates and for repairing cracks in titanium aluminide-base alloy substrates.

According to a first aspect of the present invention this object is achieved by a method of bonding two substrates of γ-titanium aluminide alloy at a faying surface, comprising the steps of applying a braze material of a titanium alloy consisting of from 10 to 35 at.% aluminum, from 5 to 30 at.% iron and/or nickel, and optionally other alloying elements present in the substrate material in quantities (at.%) up to their content in the substrate material, the remainder being titanium, at the faying surface of the substrates, and subjecting the substrates and braze material to an elevated temperature above the melting point of the braze material and below γ-solvus temperature of the γ-titanium aluminide alloy thereby joining the substrates by transient liquid phase bonding.

The γ-solvus temperature is the temperature at which the γ-structure of the titanium aluminide alloy is dissolved. It depends from the alloying contents and is determined using differential thermal analysis (DTA). Preferably, the elevated bonding temperature is chosen between 942°C and 1250°C.

According to a second aspect of the present invention this object is also achieved by a method for repairing a crack at a crack interface in a substrate of γ-titanium aluminide alloy, comprising the steps of applying a braze material of a titanium alloy consisting of from 10 to 35 at.% aluminum, from 5 to 30 at.% iron and/or nickel, and optionally other alloying elements present in the substrate material in quantities (at.%) up to their content in the substrate material, the remainder being titanium, and subjecting the substrate and braze material to an elevated temperature above the melting point of the braze material and below γ-solvus temperature of the γ-titanium aluminide alloy, thereby joining the substrate at the crack interface by transient liquid phase bonding. Preferably, the elevated bonding temperature is chosen between 942°C and 1250°C.

According to another embodiment of the first and second aspects of the present invention the braze material is preferably a titanium alloy of the general composition Ti-(10-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni. Most preferably, the braze material is selected from titanium alloys of the composition Ti-20Al-20Fe (at.%), Ti-25Al-20Fe (at.%), Ti-20Al-20Ni (at.%) and Ti-30Al-18Ni (at.%).

Preferably, the titanium aluminide alloy of the substrate is an alloy of the TNB type.

According to a third aspect of the present invention this object is also achieved by a method of bonding two substrates of γ-titanium aluminide alloy having a β-single phase region at elevated temperatures at a faying surface, comprising the steps of applying a braze material of a titanium alloy consisting of from 0 to 35 at.% aluminum, from 5 to 30 at.% iron and/or nickel, and optionally other alloying elements present in the substrate material in quantities (at.%) up to their content in the substrate material, the remainder being titanium, at the faying surface of the substrates, and subjecting the substrates and braze material to an elevated temperature in the β-single phase region thereby joining the substrates by transient liquid phase bonding. Preferably, the elevated bonding temperature is chosen between 1400°C and 1475°C.

According to a fourth aspect of the present invention this object is also achieved by a method for repairing a crack at a crack interface in a substrate of γ-titanium aluminide alloy having a β-single phase region at elevated temperatures, comprising the steps of applying a braze material of a titanium alloy consisting of from 0 to 35 at.% aluminum, from 5 to 30 at.% iron and/or nickel, and optionally other alloying elements present in the substrate material in quantities (at.%) up to their content in the substrate material, the remainder being titanium, and subjecting the substrate and braze material to an elevated temperature in the β-single phase region of the substrate thereby joining the substrate at the crack interface by transient liquid phase bonding. Preferably, the elevated bonding temperature is chosen between 1400°C and 1475°C.

According to a preferred embodiment of the third and fourth aspects of the present invention the braze material is a titanium alloy of the general composition Ti-(0-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni. More preferably, the braze material is a titanium alloy of the general composition Ti-(10-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni. Even more preferably the braze material is selected from titanium alloys of the composition Ti-29Fe (at%), Ti-24Ni (at.%), Ti-15Fe (at.%) and Ti-12Ni (at.%), Ti-20Al-20Fe (at.%), Ti-25Al-20Fe (at.%), Ti-20Al-20Ni (at.%) and Ti-30Al-18Ni (at.%).

According to another aspect of the third and fourth embodiments of the present invention, the titanium aluminide alloy of the substrate is an alloy of the TNM type.

The braze material is preferably a braze foil or a braze powder.

According to a fifth aspect of the present invention, the object is also achieved by a braze alloy useful for transient liquid phase (TLP) bonding of a substrate of γ-titanium aluminide alloy, the braze alloy having the general composition Ti-(10-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni.

The braze alloy is preferably present in form of a foil or a powder, but may be also applied by other methods, e.g. deposited by methods like electroplating or vacuum deposition procedures.

In order to facilitate application of the braze powder, the braze powder may be admixed with an organic welding flux material before application, especially when the braze powder is applied by means of a syringe onto the crack surface of the substrate. The organic welding flux is advantageously selected from viscous organic materials which are sprayable or extrudable at temperatures between room temperature and about 50°C to 60°C, and is preferably selected from the group consisting of beeswax, paraffin wax, palm oil, olive oil, oleic acid and mixtures thereof.

In the context of the present invention, the amounts of metal in the alloys are given in atomic% (at.%), titanium making up the remainder of the alloy to 100 at.%.

### DETAILED DESCRIPTION OF THE INVENTION

The titanium aluminide alloy from which the substrates are formed, is a titanium aluminide alloy of the general composition Ti-(42-49)Al-(0.1-10)X (at.%), where X represents one or more elements selected from the group of Zr, V, Nb, Ta, Cr, Mo, W, Mn, Si, B, C. Preferred alloys are e.g. commercially available alloys such as TNB-V5 with a composition of Ti-45Al-5Nb-0.2C-0.2B (at.%) or TNM™ with a composition of Ti-43.5Al-4Nb-1Mo-0.1B (at.%).

According to an aspect of the present invention the braze material useful for being applied in a method according to the present invention is a titanium aluminide alloy of the general composition Ti-(0-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni. Preferred braze materials are of the general composition Ti-(0.1-35)Al-(0-9.5)X-(5-30)Z (at.%), preferably of the general composition Ti-(10-35)Al-(0-9.5)X-(10-25)Z (at.%), such as Ti-(10-35)Al-(0.1-9.5)X-(10-25)Z (at.%), where X and Z are as defined above. Exemplary alloys are Ti-20Al-20Fe (at.%), Ti-25Al-20Fe (at.%), Ti-20Al-20Ni (at.%) and Ti-30Al-18Ni (at.%). Also binary alloys comprising titanium and a further element selected from iron and/or nickel are conceivable. Examples of suitable binary alloys are Ti-29Fe (at%), Ti-24Ni (at.%), Ti-15Fe (at.%) and Ti-12Ni (at.%).

It is generally preferable that, with exception of elements Z, the braze alloy comprises the same elements as the alloy of the substrate. The contents of elements Al and X are advantageously either selected slightly below or equal to their content in the substrate. Alternatively, the contents of elements Al and/or X are selected slightly above their content in the substrate. In the former case no or nearly no diffusion based equilibration of these elements between braze zone and substrate is necessary. In the latter case especially by carefully selecting type and content of element X the presence of unordered phases in the braze zone, which allow faster diffusion, can be promoted.

The elevated temperature (bonding temperature), to which the substrate(s) and braze alloy are subjected, is chosen to a temperature above the melting point of the braze alloy and below the melting point of the substrate alloy, preferably between 942°C and 1500°C.

Preferably, the braze foil has a thickness of 5 µm or more, preferably from 5 µm to 500 µm, more preferably from 10 µm to 300 µm, such as about 50 µm, 100 µm, 200 µm or 300 µm.

The joining is preferably performed in vacuum. The background vacuum can be chosen in a wide variety of pressures such as from 1x10⁻³ Pa to 1Pa, e.g. about 3x10⁻³ Pa. The joining can also be performed at ambient pressure under a protective gas atmosphere. Preferred protective gases are selected among nitrogen and argon.

The heating and cooling rates can be varied. For example, the heating and cooling rates may be kept at a constant rate of about 20 K min⁻¹. It is also possible to integrate heat treatments into the last phase of the bonding process, whereby the substrate is subjected to elevated temperatures again.

According to an embodiment the present invention relates to a method of bonding two substrates of titanium aluminide-base alloy of the TNB type, comprising the steps of applying a braze foil or a braze powder of a titanium alloy of the general composition Ti-(10-35 at.%)Al-(0-10 at.%)X-(5-30 at.%)Y, where X represents one or more elements selected from the group of Zr, V, Nb, Ta, Cr, Mo, W, Mn, Si, B, C, and Z represents one or more elements selected from the group of Fe and Ni, at the faying surface of the substrates, and subjecting the substrates and braze foil or braze powder to an elevated temperature between 942°C and 1250°C, thereby joining the substrates by transient liquid phase bonding. According to another embodiment, the present invention relates to a method of repairing a crack at a crack interface in a substrate of titanium aluminide-base alloy of the TNB type, comprising the steps of applying a braze foil or a braze powder of a titanium alloy of the general composition Ti-(10-35 at.%)Al-(0-10 at.%)X-(5-30 at.%)Z, where X represents one or more elements selected from the group of Zr, V, Nb, Ta, Cr, Mo, W, Mn, Si, B, C, and Z represents one or more elements selected from the group of Fe and Ni, into the crack interface, and subjecting the substrates and braze foil or braze powder to an elevated temperature between 942°C and 1250°C, thereby joining the substrates by transient liquid phase bonding.

According to a still other embodiment the present invention relates to a method of bonding two substrates of titanium aluminide-base alloy of the TNM type, comprising the steps of applying a braze foil or a braze powder of a titanium alloy of the general composition Ti-(0-10 at.%)Al(0-10 at.%)X-(5-30 at.%)Z, where X represents one or more elements selected from the group of Zr, V, Nb, Ta, Cr, Mo, W, Mn, Si, B, C, and Z represents one or more elements selected from the group of Fe and Ni, at the faying surface of the substrates, and subjecting the substrates and braze foil or braze powder to an elevated temperature between 1400°C and 1470°C, thereby joining the substrates by transient liquid phase bonding. According to yet another embodiment, the present invention relates to a method of repairing a crack at a crack interface in a substrate of titanium aluminide-base alloy of the TNM type, comprising the steps of applying a braze foil or a braze powder of a titanium alloy of the general composition Ti-(0-10) Al(0-10 at.%)X-(5-30 at.%)Z, where X represents one or more elements selected from the group of Zr, V, Nb, Ta, Cr, Mo, W, Mn, Si, B, C, and Z represents one or more elements selected from the group of Fe and Ni, into the crack interface, and subjecting the substrates and braze foil or braze powder to an elevated temperature between 1400°C and 1470°C, thereby joining the substrates by transient liquid phase bonding.

Also in these embodiments, the braze foil preferably has a thickness of 5 µm or more, preferably from 5 µm to 500 µm, more preferably from 10 µm to 300 µm, such as about 50 µm, 100 µm, 200 µm or 300 µm.

Also in these embodiments, the joining is preferably performed in vacuum. The background vacuum can be chosen in a wide variety of pressures such as from 1x10⁻³ Pa to 1Pa, e.g. about 3x10⁻³ Pa. The joining can also be performed at ambient pressure under a protective gas atmosphere. Preferred protective gases are selected among nitrogen and argon.

Also in these embodiments, the heating and cooling rates may be kept at a constant rate of about 20 K min⁻¹. According to another embodiment the substrate may be subjected to an elevated temperature towards the end of the bonding process.

### EXAMPLE 1

Two substrates of TNB-V5 were joined using a method according to the present invention, where a braze foil of a titanium alloy of the composition Ti-20Fe-20Al was applied at the faying surface of the substrates, and thereafter the substrates and braze foil were subjected to an elevated temperature of 1250°C for 24 hours, thereby joining the substrates by transient liquid phase bonding. For comparative purposes a TNB-V5 substrate was also subjected to a temperature of 1250°C for 24 hours.

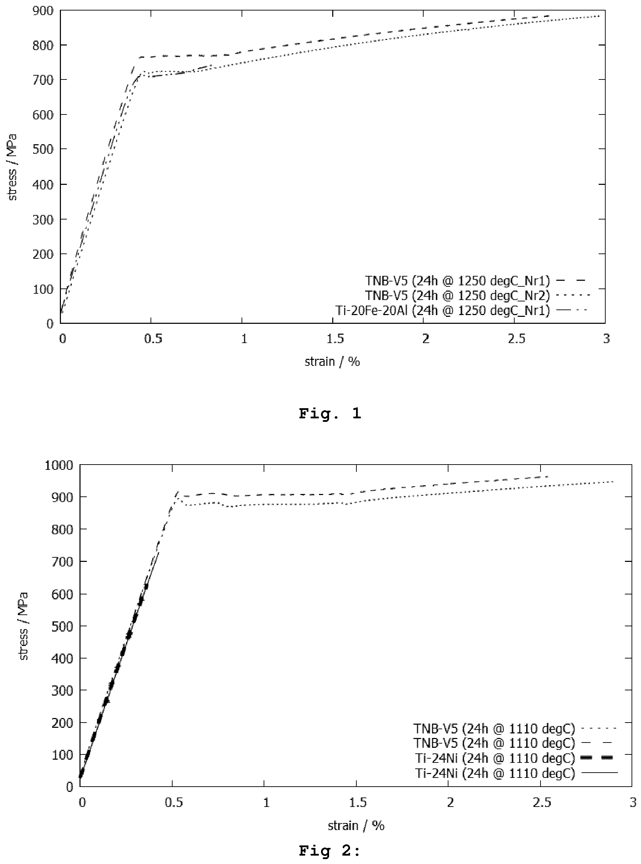

The strain versus stress curves of a specimen of the joined substrates and of two different specimens of the TNB-V5 substrate were recorded respectively. The results are shown in Figure 1. Figure 1 shows that surprisingly an equal yield stress can be achieved, within the accuracy of the experiment. In addition a plastic ductility of nearly 0.5% is retained in the joined substrate.

### EXAMPLE 2

Two substrates of TNB-V5 were joined using a method according to the present invention, where a braze foil of a titanium alloy of the composition Ti-24Ni was applied at the faying surface of the substrates, and thereafter the substrates and braze foil were subjected to an elevated temperature of 1110°C for 24 hours, thereby joining the substrates by transient liquid phase bonding. For comparative purposes a TNB-V5 substrate was also subjected to a temperature of 1110°C for 24 hours.

The strain versus stress curves of two different specimens of the joined substrates and of one specimen of the TNB-V5 substrate were recorded respectively. The results are shown in Figure 2. Figure 2 shows that a tensile strength only 10% below the yield stress of an untreated specimen can be achieved, within the accuracy of the experiment.

### EXAMPLE 3

Two substrates of TNM were joined using a method according to the present invention, where a braze foil of a titanium alloy of the composition Ti-15Fe was applied at the faying surface of the substrates, and thereafter the substrates and braze foil were subjected to an elevated temperature of 1450°C (i.e. in the β-phase region) for 2 hours under vacuum, thereby joining the substrates by transient liquid phase bonding. Subsequently, the brazed specimen was cooled with a cooling rate of 20 K/min.

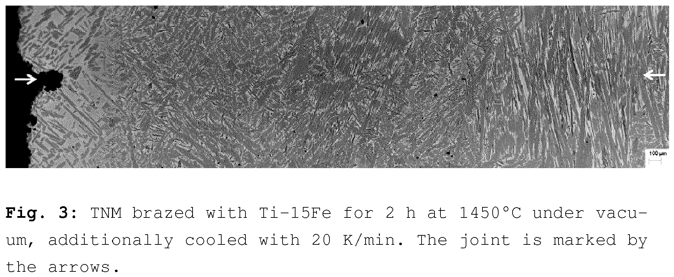

The microstructure of the produced joint is shown in Figure 3. Surprisingly no visible difference in microstructure between the substrate material and the joint zone is visible in Figure 3. The joint is marked by the arrows.

## Claims

1. A method of bonding two substrates of γ-titanium aluminide alloy at a faying surface, comprising the steps of applying a braze material of a titanium alloy consisting of from 10 to 35 at.% aluminum, from 5 to 30 at.% iron and/or nickel, and optionally other alloying elements present in the substrate material in quantities (at.%) up to their content in the substrate material, the remainder being titanium, at the faying surface of the substrates, and subjecting the substrates and braze material to an elevated temperature above the melting point of the braze material and below γ-solvus temperature of the substrate thereby joining the substrates by transient liquid phase bonding.

2. A method for repairing a crack at a crack interface in a substrate of γ-titanium aluminide alloy, comprising the steps of applying a braze material of a titanium alloy consisting of from 10 to 35 at.% aluminum, from 5 to 30 at.% iron and/or nickel, and optionally other alloying elements present in the substrate material in quantities (at.%) up to their content in the substrate material, the remainder being titanium, and subjecting the substrate and braze material to an elevated temperature above the melting point of the braze material and below γ-solvus temperature of the substrate thereby joining the substrate at the crack interface by transient liquid phase bonding.

3. The method of any of claims 1 or 2, wherein the elevated bonding temperature is chosen between 942°C and 1250°C.

4. The method of any of claims 1 to 3, wherein the braze material is a titanium alloy of the general composition Ti-(10-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni.

5. The method of claim 4, wherein the braze material is selected from titanium alloys of the composition Ti-20Al-20Fe (at.%), Ti-25Al-20Fe (at.%), Ti-20Al-20Ni (at.%) and Ti-30Al-18Ni (at.%).

6. The method of any of claims 1 to 5 wherein the titanium aluminide alloy of the substrate is an alloy of the TNB type.

7. A method of bonding two substrates of γ-titanium aluminide alloy having a β-single phase region at elevated temperatures at a faying surface, comprising the steps of applying a braze material of a titanium alloy consisting of from 0 to 35 at.% aluminum, from 5 to 30 at.% iron and/or nickel, and optionally other alloying elements present in the substrate material in quantities (at.%) up to their content in the substrate material, the remainder being titanium, at the faying surface of the substrates, and subjecting the substrates and braze material to an elevated temperature in the β-single phase region of the substrate thereby joining the substrates by transient liquid phase bonding.

8. A method for repairing a crack at a crack interface in a substrate of γ-titanium aluminide alloy having a β-single phase region at elevated temperatures, comprising the steps of applying a braze material of a titanium alloy consisting of from 0 to 35 at.% aluminum, from 5 to 30 at.% iron and/or nickel, and optionally other alloying elements present in the substrate material in quantities (at.%) up to their content in the substrate material, the remainder being titanium, and subjecting the substrate and braze material to an elevated temperature in the β-single phase region of the substrate thereby joining the substrate at the crack interface by transient liquid phase bonding.

9. The method of any of claims 7 or 8, wherein the elevated bonding temperature is chosen between 1400°C and 1475°C.

10. The method of any of claims 7 to 9, wherein the braze material is a titanium alloy of the general composition Ti-(0-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni.

11. The method of any of claim 10, wherein the braze material is a titanium alloy of the general composition Ti-(10-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni.

12. The method of claim 11, wherein the braze material is selected from titanium alloys of the composition Ti-29Fe (at%), Ti-24Ni (at.%), Ti-15Fe (at.%) and Ti-12Ni (at.%), Ti-20Al-20Fe (at.%), Ti-25Al-20Fe (at.%), Ti-20Al-20Ni (at.%) and Ti-30Al-18Ni (at.%).

13. The method of any of claims 7 to 12 wherein the titanium aluminide alloy of the substrate is an alloy of the TNM type.

14. The method of any of the previous claims wherein the braze material is a braze foil or a braze powder.

15. A braze alloy useful for transient liquid phase (TLP) bonding of a substrate of γ-titanium aluminide alloy, the braze alloy having the general composition Ti-(10-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni.

16. The braze alloy according to claim 15, wherein the braze alloy present in form of a foil or a powder.

17. The braze metal alloy of 16 in the form of a powder, which is in admixture with an organic welding flux.

18. The braze metal alloy of claim 17 wherein organic welding flux is selected from the group consisting of beeswax, paraffin wax, palm oil, olive oil, oleic acid and mixtures thereof.
